# EUROPEAN PATENT SPECIFICATION

(11) **EP 1 365 665 B1**
(45) Date of publication and mention of the grant of the patent: **08.04.2009**
(21) Application number: 01978636.7
(22) Date of filing: 29.10.2001
(51) Int. Cl.: A41D 19/00, A41D 31/00

(54) **GLOVES**
HANDSCHUE
GANTS

(30) Priority: 09.03.2001 GB 0105797
(43) Date of publication of application: 03.12.2003
(73) Proprietor: Connor, Dennis Frederick, Bexhill-on-Sea TN39 3AR (GB)
(72) Inventor: Connor, Dennis Frederick, Bexhill-on-Sea TN39 3AR (GB)
(74) Representative: Townsend, Victoria Jayne
(86) International application number: PCT/GB2001/004784
(87) International publication number: WO 2002/071876

(56) References cited:
- FR-A- 2 078 861
- US-A- 4 918 754
- US-A- 4 937 995
- US-A- 5 051 034
- US-A- 5 922 482

## Description

This invention relates to gloves and more especially to gloves whose presence can be detected electro-magnetically.

The wearing of gloves by operatives in manufacturing industries, such as pharmaceutical, food and tobacco industries, is important to protect products from contamination and to preserve the required high standards of hygiene and cleanliness. A consequence of this is that a glove or a relatively small piece of a glove caused, for example, by the glove snagging or being torn, may become detached from an operative's glove and be mixed with products being manufactured.

To meet this problem, it is accepted practice that operatives' gloves should be coloured blue and it is now a requirement in many countries that this procedure be followed so that gloves can be detected visually. Visual detection is not foolproof, particularly where small glove pieces are concerned. ,

Electro-magnetic inspection of products leaving a production line is undertaken as a matter of course in many industries. Such inspections enable metal-based foreign bodies present in otherwise non-metallic products to be detected. In this way, contaminated products can be selectively discarded. Operatives' gloves are generally produced from a polymeric substance (e.g. a plastisol) and their presence in a product would not at present be detected other than by visual inspection.

US-A-5922482 discloses polymeric protective articles, such as gloves, normally used in manufacturing, conversion or packaging lines, especially in the agri-foodstuffs, pharmaceuticals or food sector. The articles are multi-layered with one layer containing a material having conducting and/or magnetic properties, which is detectable by a metal-particle detector. A process for preparing the said articles is also disclosed.

One object of the present invention is to provide a glove for use by operatives on, for example, manufacturing production lines which can be detected electro-magnetically in the event that it or a part thereof becomes mixed with products during the manufacturing process.

According to the present invention there is provided a plastics material containing an evenly dispersed quantity of electromagnetically detectable particles, the quantity of particles added to the plastics material representing between 3% and 6 % by volume of the mix, and the average size of the particles being between 1 and 200 microns.

The plastics material may be a plastisol such a natural latex, acrylonitrile-butadiene (nitrite) or polyvinylchloride (pvc). Typically, the gloves are produced by a process in which a glove-shaped former is immersed for a relatively short period of time in a solution of the plastics material. The solution may also include various additives such as stabilisers, accelerators and fillers. To produce a single glove, the former may be sequentially immersed two or more times.

Typically, the average particle size of the electro-magnetically detachable material is in the range 50 to 200 microns, preferably between 50 and 100 microns.

The electro-magnetically detectable material is preferably a ferrous material, more preferably ferrous oxide typically comprising γFe₂O₃. The material may consist solely of a single metallic substance e.g. a ferromagnetic or ferrimagnetic material, or it may comprise a mixture of two or more different electro-magnetically detectable materials including an iron-containing powder. Alternatively, the material may comprise a bronze alloy of copper with aluminium, manganese or beryllium. The alloy may be an alloy of copper and tin and may include other metals such as zinc or lead.

The electro-magnetically detectable powder is preferably mixed with the liquid plastisol to produce a relatively homogenous mix and the quantity of powder added represents between 3% and 6 % by volume of the mix. Typically, the quantity is of the order of 5% by volume. Homogenous distribution of the electro-magnetically detectable material allows even small fragments of a glove to be detected with conventional electro-magnetically operating detection equipment.

When the electro-magnetically detectable material is in powder form, then its type and particle size is preferably such as to be detectable in the frequency range 50 kHz to 600 kHz, which is a frequency range that is employed by conventional detection equipment. As mentioned, the particle size of the majority of the powder is preferably below 200 microns, and would usually be above 1 micron. More preferably the particle size of the majority of the powder is in the range 50 to 200 microns and most preferably it is in the range 50 to 100 microns.

In use, the intimate presence of the electro-magnetically detectable powder within the glove material is sufficient to activate conventional detection equipment in the event that a glove or a relatively small part of a glove is present in manufactured products leaving a production line as set out in the appended claims.

It will be appreciated that the foregoing is merely exemplary of gloves in accordance with the invention and that modifications can readily be made thereto without departing from the true scope of the invention as set out in the appended claims.

## Claims

1. A glove produced from a plastics material containing an evenly dispersed quantity of electromagnetically detectable particles, the average size of the particles being between 1 and 200 microns **characterized in that** the quantity of particles added to the plastics material represents between 3 % and 6 % by volume of the mix.

2. A glove as claimed in claim 1 wherein the plastics material is a plastisol.

3. A glove as claimed in claim 2 which the plastisol is natural latex, acrylonitrile-butadiene or polyvinylchloride.

4. A glove as claimed in any one of claims 1 to 3 wherein the average particle size is in the range 50 to 200 microns.

5. A glove as claimed in any one of claims 1 to 4 wherein the average particle size is in the range of 50 and 100 microns.

6. A glove as claimed in any one of the preceding claims wherein the composition of the electro-magnetically detectable particles includes a ferrous material.

7. A glove as claimed in claim 6 wherein the ferrous material is an oxide of iron.

8. A glove as claimed in claim 7 wherein the material is ferrous oxide.

9. A glove as claimed in claim 8 wherein the ferrous oxide is γFe₂O₃.

10. A glove as claimed in any one of claims 1 to 9 wherein the composition of the particles comprises a mixture of two or more different electro-magnetically detectable materials.

11. A glove as claimed in any one of claims 1 to 5 wherein the composition of the electro-magnetically detectable material comprises a bronze alloy of copper with aluminium, manganese or beryllium.

12. A glove as claimed in claim 11 wherein the alloy is an alloy of copper and tin.

13. A glove as claimed in any preceding claim wherein the quantity of particles is 6 % by volume.

## Patentansprüche

1. Handschuh aus einem Kunststoffmaterial hergestellt, das eine gleichmäßig verteilte Menge an elektromagnetisch erfassbaren Teilchen aufweist, wobei die durchschnittliche Größe der Teilchen zwischen 1 und 200 Mikrometer beträgt, **dadurch gekennzeichnet, dass** die Menge der Teilchen, die zu dem Kunststoffmaterial hinzugefügt worden sind, zwischen 3 und 6 Volumenprozent der Mischung darstellt.

2. Handschuh nach Anspruch 1, wobei das Kunststoffmaterial ein Plastisol umfasst.

3. Handschuh nach Anspruch 2, wobei das Plastisol ein natürliches Latex, ein Acrylnitril-Butadien oder ein Polyvinylchlorid umfasst.

4. Handschuh nach einem der Ansprüche 1 bis 3, wobei die durchschnittliche Größe der Teilchen sich in dem Bereich von 50 bis 200 Mikrometer befindet.

5. Handschuh nach einem der Ansprüche 1 bis 4, wobei die durchschnittliche Größe der Teilchen sich in dem Bereich von 50 bis 100 Mikrometer befindet.

6. Handschuh nach einem der vorhergehenden Ansprüche, wobei die Zusammensetzung der elektromagnetisch erfassbaren Teilchen ein eisenhaltiges Material umfasst.

7. Handschuh nach Anspruch 6, wobei das eisenhaltige Material ein Oxid des Eisens umfasst.

8. Handschuh nach Anspruch 7, wobei das eisenhaltige Material ein Eisenoxid umfasst.

9. Handschuh nach Anspruch 8, wobei das Eisenoxid ein Maghemit (γ-Fe₂O₃) umfasst.

10. Handschuh nach einem der Ansprüche 1 bis 9, wobei die Zusammensetzung der Teilchen eine Mischung von zwei oder mehr verschiedenen elektromagnetisch erfassbaren Materialien aufweist.

11. Handschuh nach einem der Ansprüche 1 bis 5, wobei die Zusammensetzung der elektromagnetisch erfassbaren Teilchen eine Bronzelegierung von Kupfer mit Aluminium, Mangan oder Beryllium aufweist.

12. Handschuh nach Anspruch 11, wobei die Legierung eine Legierung von Kupfer und Zinn umfasst.

13. Handschuh nach einem der vorhergehenden Ansprüche, wobei die Menge der Teilchen 6 Volumenprozent beträgt.

## Revendications

1. Gant produit à partir d'une matière plastique contenant une quantité uniformément répartie de particules électromagnétiquement détectables, la taille moyenne des particules étant comprise entre 1 et 200 microns, la quantité de particules ajoutée à la matière plastique représente entre 3 % et 6 % en volume du mélange.

2. Gant selon la revendication 1, dans lequel la matière plastique est un plastisol.

3. Gant selon la revendication 2, dans lequel le plastisol est un latex naturel, un acrylonitrile-butadiène ou un poly(chlorure de vinyle).

4. Gant selon l'une quelconque des revendications 1 à 3, dans lequel la taille moyenne de particule est dans la plage allant de 50 à 200 microns.

5. Gant selon l'une quelconque des revendications 1 à 4, dans lequel la taille moyenne de particule est dans la plage allant de 50 à 100 microns.

6. Gant selon l'une quelconque des revendications précédentes, dans lequel la composition des particules électromagnétiquement détectables comprend un matériau ferreux.

7. Gant selon la revendication 6, dans lequel le matériau ferreux est un oxyde de fer.

8. Gant selon la revendication 7, dans lequel le matériau est l'oxyde ferreux.

9. Gant selon la revendication 8, dans lequel l'oxyde ferreux est γFe₂O₃.

10. Gant selon l'une quelconque des revendications 1 à 9, dans lequel la composition des particules comprend un mélange de deux matériaux électromagnétiquement détectables différents ou plus.

11. Gant selon l'une quelconque des revendications 1 à 5, dans lequel la composition du matériau électromagnétiquement détectable comprend un alliage bronze de cuivre avec de l'aluminium, du manganèse ou du béryllium.

12. Gant selon la revendication 11, dans lequel l'alliage est un alliage de cuivre et d'étain.

13. Gant selon l'une quelconque des revendications précédentes, dans lequel la quantité de particules est de 6 % en volume.
